# EUROPÄISCHE PATENTSCHRIFT

(11) **EP 0 631 724 B1**
(45) Veröffentlichungstag und Bekanntmachung des Hinweises auf die Patenterteilung: **04.08.1999**
(21) Anmeldenummer: 94105660.8
(22) Anmeldetag: 13.04.1994
(51) Int. Cl.: A21B 3/07

(54) **Teiglinge-Bereitstellungsstation für automatische Beschickungseinrichtung**
Supply station for pieces of dough of an automatic loading device
Station pour la disposition de morceaux de pâte d'un dispositif automatique de chargement

(30) Priorität: 26.06.1993 DE 4321409
(43) Veröffentlichungstag der Anmeldung: 04.01.1995
(73) Patentinhaber: Werner & Pfleiderer Lebensmitteltechnik GmbH, 91550 Dinkelsbühl (DE)
(72) Erfinder: Knost, Dieter, Dipl.-Ing., D-74579 Fichtenau (DE); Hübener, Edgar, D-91522 Ansbach (DE)
(74) Vertreter: Rau, Manfred, Dr. Dipl.-Ing.

(56) Entgegenhaltungen:
- EP-A- 0 231 831
- FR-A- 1 448 347
- FR-A- 2 492 224
- FR-A- 2 537 398

## Beschreibung

Die Erfindung betrifft eine Teiglinge-Bereitstellungsstation für eine automatische Beschickungseinrichtung zum Beladen von Etagenbacköfen.

Vorrichtungen zum Beschicken und Entleeren von Backöfen mittels Krabbelbänder sind bekannt. Nachteilig hierbei ist (z.B. DE-OS 29 34 369), dass die Krabbelbänder von Hand belegt werden und somit in dieser Zeit diese für eine Beladung oder Entnahme nicht genutzt werden können. In jüngster Zeit wurden bereits automatische Beschickungsanlagen vorgestellt, die per Knopfdruck programmgesteuert eine Beschickung und Entleerung ganzer Backofenbatterien vollziehen. Diese sind dabei in der Lage mittels der Ladezunge Teiglinge direkt aus einem Garschrank oder von einer Arbeitsfläche aufzukrabbeln.

Bei neu einzurichtende Backstuben lässt sich die Aufstellung der Ofenbatterie, Gärschrank und/oder Arbeitsfläche der Leistungsfähigkeit und dem Aktionsbereich der automatischen Beschickungsanlage anpassen.

Sofern aber eine solche Beschickungseinrichtung in einer bereits ausgerüsteten Backstube eingesetzt werden soll, treten Schwierigkeiten bei der ausreichenden Bereitstellung von Teiglinge auf.

Der Erfindung liegt die Aufgabe zugrunde, zur besseren Auslastung einer automatischen Ofenbeschickungseinrichtung eine Einrichtung zu schaffen, welche eine ausreichende Anzahl von Teiglinge als Teiglingsverband bereitstellt.

Diese Aufgabe wird erfindungsgemäss durch die Merkmale des Anspruches 1 gelöst.

Durch die Erfindung ist in bequemer Arbeitshöhe eine Arbeitsfläche für das Absetzen und Abrichten (z.B. Korbbrot) der Teiglinge geschaffen, die regelbar antreibbar ist und während dieser Zeit auch belegt werden kann, in der die Ladezunge der Ofenbeschickungseinrichtung den fertig gestellten Teiglingsverband aus der Bereitstellungsstation aufkrabbelt. Überdies können zusätzlich auf Gärdielen freisitzend gegarte Teiglinge in der Bereitstellungsstation für die Ladezunge bereitgestellt werden.

In Weiterbildung der Erfindung nach den Merkmalen des Anspruches 2 ist eine vorteilhafte taktweise Antriebsweise der Arbeitsfläche gegeben.

Mit den Merkmalen des Anspruches 3 sind Erleichterungen für das Bedienungspersonal für die Formierung eines Teiglingverbandes gegeben.

Mit den Merkmalen der Ansprüche 4 und 5 sind vorteilhafte Ausbildungen für die Aufnahme von Gärdielen aufgezeigt.
Die Erfindung soll nachfolgend anhand einer Zeichnung näher erläutert werden.
Es zeigt:
- Fig. 1: eine Bereitstellungsstation aus der Ein-und Ausfahrsicht der Ladezunge
- Fig. 2: eine Draufsicht nach Fig. 1
- Fig. 3: eine Draufsicht entsprechend der Linie A-A mit Ladezungen und angedeuteter Backofenfront
- Fig. 4: eine Einzelheit eines Einschubsrahmen für Gärdielen

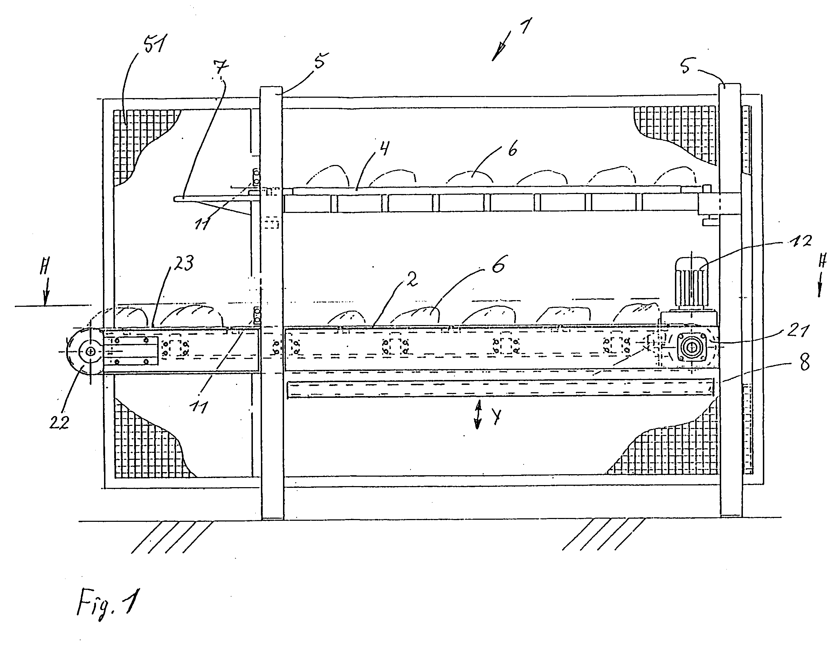

Die Teiglinge-Bereitstellungsstation 1 besteht aus einem von Schutzgitterfeldern 51 umgebenem Gestell 5. Die Masse des Gestells 5 in der Länge und Breite sind nach der Ladezungenbreite 8 und der Herdtiefe gestattet. Die in drei Ebenen x,y u.z verfahrbare Ladezunge 8 ist in der Fig. 1 wegen einer besseren Übersicht in einer Stellung unterhalb des Bandes 2 dargestellt (die die Ladezungen 8 aufnehmende Ofenbeschickungseinrichtung ist nicht gezeigt). In bequemer Arbeitshöhe (ca 900 mm vom Boden) ist ein nachspannbares Endlosbreitband 2 mit regelbarem Antrieb angeordnet. Ein Motor 12 (Frequenzumformer-Getriebemotor-Kombination) treibt die Antriebsrolle 21 des Endlosbreitbandes 2 an. Die gegenüberliegende Umlenk-und Spannrolle 22 ist über Streben 52 ausserhalb vom Gestell 5 angeordnet, wodurch sich eine ca. 900 mm lange Arbeitsfläche 23 ergibt. Über dem Breitband 2 ist beabstandet im Gestell 5 ein Einschubrahmen 3 für Gärdielen 4 angeordnet.

Die Anzahl möglicher Einschubrahmen 3 übereinander richtet sich nach dem Wunsch des Kunden und kann zwischen ein und fünf Einschubrahmen liegen (in der Zeichnung ist nur eine Etage von Einschubrahmen gezeigt).

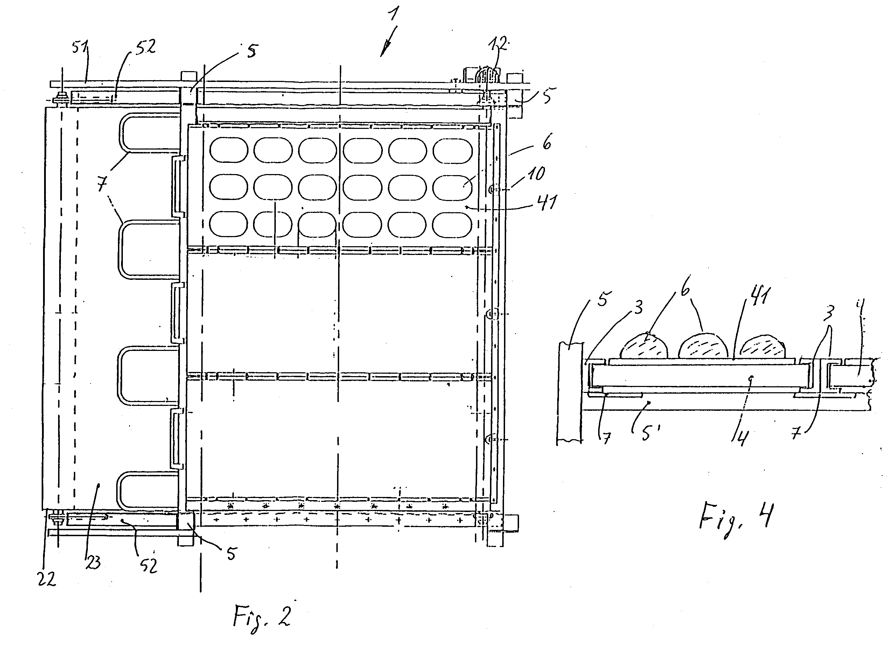

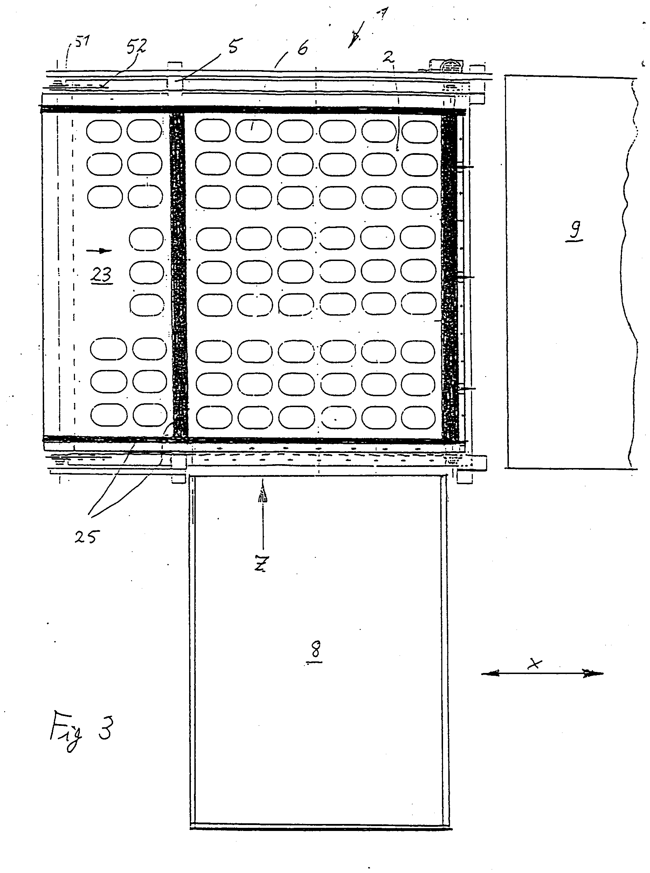

In Fig. 4 ist als vergrösserte Einzelheit die Aufnahme einer Gärdiele 4 in den Einschubrahmen 3 dargestellt. Die aus U-Profilen bestehenden Einschubrahmen 3 sind auf Querstreben 5' des Gestells 5 befestigt. An den stirnseitigen Querstreben 5' sind zum leichteren Einfädeln der Gärdielen 4 in die Einschubrahmen 3 Auflagebügel 7 befestigt.
Die Wirkungsweise der Bereitstellungsstation 1 wird anhand der Brotherstellung beschrieben.
Die Teiglinge 6, sowohl Korbbrot, wie auch freisitzend garendes Brot, müssen der automatischen Ofenbeschickungseinrichtung zum Aufkrabbeln bereitgestellt werden. Die Bereitstellungsstation 1 löst diese Problemstellung für den Chargenbetrieb, sowohl für Korbbrot auf dem Breitband 2, wie auch für freisitzen garendes Brot im Dieleneinschub.
Im Korb gegartes Brot wird auf die Arbeitsfläche 23 von zwei Personen aufgesetzt, nach Start des Bandes 2 (Start der Programmsteuerung) takted das Band 2 schrittweise entsprechend der Brotlänge vorwärts bis eine komplette Herdbelegung auf das Band 2 aufgesetzt ist. Die Taktzeit ist so abgestimmt, dass alle zu dieser Brotrezeptur gehörenden handwerklichen Arbeiten (Abrichten), wie Schneiden, Abstreichen, etc. erledigt werden können. Nachdem die Herdbelegung vollständig durchgelaufen ist, fährt das Band 2 vor in Abgabeposition und die Ladezunge 8 der Ofenbeschickungseinrichtung läuft 90° quer zur Bandbewegungsrichtung in die Bereitstellungsstation ein und krabbelt die Teiglinge 6 (Teiglingsverband) auf.

Die Positionssteuerung des Taktbandes 2 erfolgt über nicht näher gezeigte Näherungsschalter am Gestell 5, die von in das Band 2 eingewebten Drahtschlingen betätigt werden.
Entweder bereits während des Abkrabbelns des ersten Teiglingsverband (Herdbelegung) vom Band 2 oder nach Abholung der Charge durch die Ofenbeschickungseinrichtung kann das Band neu belegt werden. Die Anordnung der Teiglinge 6 auf dem Band 2 ist frei, innerhalb der markierten Belegungsfläche. Die Belegungsfläche des Bandes 2 ist durch farbige Rand-und Querstreifen 25 gut sichtbar markiert. Der Eingriff in den Gefärdungsbereich wird von den Zaunelementen 51 und einer Lichtschranke 11 gesichert.

### Dieleneinschub

Für frei auf Dielen garendes Brot sind je Herd 3 Spezialdielen 4 konzipiert, die zunächst wie üblich auf einem Wagen im Gärraum stehen. Nach Ende der Gärzeit werden die Dielen 4 mit den darauf befindlichen freigarenden Broten in den Dieleneinschub (Einschubrahmen 3) hineingeschoben, je drei Dielen 4 werden dabei quer zu einer Herdfläche kombiniert.

Der Einschub ist durch Lichtschranke gesichert. Das Einfädeln der Dielen 4 wird durch vorstehende Auflagebügel 7 erleichtert. An jeder Dielenstirnseite ist ein Schaltmagnet montiert. Der magnetische Näherungsschalter 10 ist im Rahmen 5 der Bereitstellungsstation 1 angebracht.

Auf diese Weise kann die Ladezunge 8 der Ofenbeschickungseinrichtung auf die Dielenhöhe nur einfahren, wenn alle 3 Gärdielen 4 in die korrekte Lage eingeschoben sind.

Die Gärdielen 4 werden von einem U-förmigen Rahmen über ihre Länge gehalten, so dass die Durchbiegung minimiert wird. Die Dielenfläche 41 selbst ist aus tuchbespannten AL-Lochblechen hergestellt, sie wird von einem profilierten AL-Rahmen eingefasst und mit unten liegenden Streben ausgesteift. Auf der Einschubhöhe ergibt sich so eine ebene, nur durch kleinste Spalte unterbrochene Fläche, auf der die Ladezunge 8 aufsetzen und entlangfahren kann.
Vorteilhafterweise kann wie in Fig. 3 dargestellt die Bereitstellungsstation 1 in einer Linie mit der Backofenfront 9 aufgestellt werden, so dass die Ladezunge 8 der nicht näher dargestellten Ofenbeschickungseinrichtung, die auf dem Breitband 2 im Gestell 5 als Teiglingsverband zusammengestellten Teiglinge 6 in wenigen Sekunde aufkrabbeln kann. Durch die farbige Längst-und Quermarkierung 25 ist die Belegungsfläche auf dem Band 2 sehr gut sichtbar für das Bedienungspersonal. In Fig. 3 ist ein fertiger Teiglingsverband zum Aufkrabbeln durch die Ladezunge 8 gezeigt, wobei auf der Arbeitsfläche 23 schon ein Teil der nächste Teiglinge 6 aufgelegt sind.
Über einen nicht gezeigten Schalter kann vom Bedienpersonal, die durch die Programmsteuerung vorgebene Taktzeit des Breitbandes 2 angehalten bzw. verändert werden.

## Patentansprüche

1. Teiglinge-Bereitstellungsstation für eine automatische Ofenbeschickungseinrichtung, die eine mit einem Krabbelband ausgerüstete Ladezunge (8) zum Aufkrabbeln der Teiglinge (6) und zur Beladung und Entleerung der Herde besitzt und vor einer Ofenfront verfahrbar angeordnet ist, dadurch gekennzeichnet, dass in einem nach Massgabe der Ladezungenbreite und Herdtiefe gestalteten Gestell (5) in Arbeitshöhe ein mit regelbarem Antrieb versehenes Endlosbreitband (2) so angeordnet ist, dass ausserhalb des Gestells (5) eine vorstehende Arbeitsfläche (23) zur manuellen Belegung mit Teiglinge (6) gebildet ist und die Entnahme der Teiglinge (6) durch die Ladezunge (8) um 90° versetzt zur Laufrichtung des Bandes (2) innerhalb des Gestells (5) erfolgt, wobei über dem Endlosbreitband (2) wenigstens ein Einschubrahmen (3) zur Aufnahme von Gärdielen (4) angeordnet ist.

2. Teiglinge-Bereitstellungsstation nach Anspruch 1, dadurch gekennzeichnet, dass das Endlosbreitband (2) über eine im Gestell (5) angeordnete mit einem Motor (12) in Verbindung stehende Antriebswelle (21) und gegenüberliegend über eine mittels Streben (52) ausserhalb des Gestells (5) angeordneten Umlenkrolle (22) geführt ist, wobei der taktweise Transport des Endlosbreitbandes (2) über die Programmsteuerung der Ofenbeschickungseinrichtung in Abhängigkeit der Abrichtzeit für die jeweiligen Teiglinge (6) erfolgt.

3. Teigline-Bereitstellungsstation nach Anspruch 1, dadurch gekennzeichnet, dass das Endlosbreitband (2) mit farbigen Rand-und Querstreifen (25) zwecks Markierung der Belegungsfläche versehen ist.

4. Teiglinge-Bereitstellungsstation nach Anspruch 1, dadurch gekennzeichnet, dass die Einschubrahmen (3) aus U-Profilen bestehen und so angeordnet sind, dass in einer Etage drei Gärdielen (4) aufgenommen werden können.

5. Teiglinge-Bereitstellungsstation nach Anspruch 4, dadurch gekennzeichnet, dass zur Erleichterung des Einfädelns der Gärdielen (4) in die Einschubrahmen (3) Auflagebügel (7) am Gestell (5') angeordnet sind.

## Claims

1. A supply station for pieces of dough of a automatic oven loading device, which comprises a loading tongue (8) equipped with a insertion belt for the dough pieces (6) to be inserted and the hearths to be charged and discharged, and which is disposed for displacement before a front of the oven, characterized in that a continuous wide belt (2) provided with a controllable drive is disposed at a operating height in a frame (5), which is designed as a faction of the width of the loading tongue ad the depth of the hearth, so that a operating desk (23) is formed, standing out outside the frame (5) for dough pieces (6) to be placed thereon manually, and so that picking the dough pieces (6) is effected by the loading tongue (8) within the frame (5) in a manner displaced by 90° relative to the direction of travel of the belt (2), at least one rack (3) being disposed above the continuous wide belt (2) for fermentation boards (4) to be inserted.

2. A supply station for pieces of dough according to claim 1, characterized in that the continuous wide belt (2) is guided over a driving shaft (21) disposed in the frame (5) ad connected to a motor (12), ad on the opposite side over a deflection pulley (22) disposed outside the frame (5) by means of braces (52), cycled conveyance of the continuous wide belt (2) taking place via the program control of the oven loading device in dependence on the dressing time for the respective pieces of dough (6).

3. A supply station for pieces of dough according to claim 1, characterized in that the continuous wide belt (2) is provided with colored marginal and crosswise stripes (25) as a marking for the insertion surface.

4. A supply station for pieces of dough according to claim 1, characterized in that the racks (3) are U-shaped sections disposed so that a single deck can lodge three fermentation boards (4).

5. A supply station for pieces of dough according to claim 4, characterized in that bearing shackles (7) are disposed on the frame (5'), facilitating the threading into the racks (3) of the fermentation boards (4).

## Revendications

1. Poste d'approvisionnement en morceaux de pâte, pour un mécanisme de chargement automatique de four qui comporte une palette de chargement (8), équipée d'une bande de reprise pour la reprise des morceaux de pâte (6) et pour le chargement et le vidage de la soie, et qui est agencé de manière amovible devant un avant de four,
***caractérisé en ce que,*** dans un châssis (5) façonné suivant la mesure de la largeur de la palette de chargement et la profondeur du four, à la hauteur de travail est agencée une large bande sans fin (2) équipée d'un entraînement réglable, de façon en ce qu'en dehors du châssis (5) il est formé une surface de travail (23) en saillie pour le garnissage manuel avec des morceaux de pâte (6) et de façon à ce que le retrait des morceaux de pâte (6) est effectué par la palette de chargement (8) décalée de 90 degrés par rapport à la direction de circulation de la bande (2) dans le châssis (5), au moins un cadre d'insertion (3) pour la réception de planches de fermentation (4) étant agencé au-dessus de la large bande sans fin (2).

2. Poste d'approvisionnement en morceaux de pâte suivant la revendication 1, caractérisé en ce que la large bande sans fin (2) est guidée par un arbre d'entraînement (20) agencé dans le châssis (5) et en liaison avec un moteur (12) et, à l'opposé, par un rouleau de renvoi (2) agencé au moyen de barres (52) à l'extérieur du châssis (5), le transport synchronisé de la large bande sans fin (2) étant effectué par la commande programmée du mécanisme de chargement de four, en fonction du temps de dressage pour les morceaux de pâte (6) respectifs.

3. Poste d'approvisionnement en morceaux de pâte suivant la revendication 1, caractérisé en ce que la large bande sans fin (2) est munie de bandes de bords et transversales colorées (25) aux fins de marquer les surfaces de garnissage.

4. Poste d'approvisionnement en morceaux de pâte suivant la revendication 1, caractérisé en ce que les cadres d'insertion (3) sont constitués de profilés en U et sont agencés de façon à ce que trois planches de fermentation (4) puissent être logées dans un étage.

5. Poste d'approvisionnement en morceaux de pâte suivant la revendication 4, caractérisé en ce que pour faciliter l'insertion des planches de fermentation (4) dans les cadres d'insertion (3), des arceaux de support (7) sont agencés sur le châssis (5').
